# EUROPEAN PATENT APPLICATION

(11) **EP 2 911 067 A1**
(43) Date of publication of application: **26.08.2015**
(21) Application number: 13847155.2
(22) Date of filing: 21.06.2013
(51) Int. Cl.: G06F 17/21, G06K 9/46, G06F 21/32

(54) **ELECTRONIC SIGNING METHOD BASED ON BIOMETRIC INFORMATION RECOGNITION AND METHOD FOR VERIFYING ELECTRONICALLY SIGNED ELECTRONIC DOCUMENT BASED ON SAID BIOMETRIC INFORMATION RECOGNITION, AND TERMINAL, SERVER, AND COMPUTER-READABLE RECORDING MEDIUM USING SAME**

(30) Priority: 16.10.2012 KR 20120114739
(71) Applicant: Secucen Co., Ltd., Seoul 137-867 (KR)
(72) Inventor: SHIN, Joon Ho, Yongin-si Gyeonggi-do 446-858 (KR)
(74) Representative: Gulde & Partner
(86) International application number: PCT/KR2013/005491
(87) International publication number: WO 2014/061895

(57) **Abstract**

Provided is a method for generating an electronic document by a biometric information recognition device. The method includes the steps of: (a) acquiring biometric information to be inserted into an electronic document or feature point information on the biometric information; (b) encoding the biometric information or the feature point information on the biometric information, a hash value for a source document of the electronic document, and acquisition time information of the biometric information or the feature point information on the biometric information, with a biometric data standard; and (c) integrating the information encoded with the biometric data standard with the source document of the electronic document to complete the electronic document.

## Description

### BACKGROUND OF THE INVENTION

The present invention disclosed herein relates to a method for electronically signing an electronic document using biometric information and a method for verifying the electronic document. The present invention also relates to a terminal, a server and a computer-readable recording medium for the methods.

Korean Patent Application Laid-open Publication No. 10-2009-0016886 discloses a method for generating an encrypted signature. The method includes a step of inputting a signature and a password, a step of encrypting the input password to generate a fake stroke to be added to the signature and insertion location information on the fake stroke, and a step of adding the fake stroke to the signature on the basis of the insertion location information on the fake stroke to generate an encrypted signature. Here, the fake stroke represents an additional stroke generated by a password in addition to a signature input from a signer. By virtue of such a configuration, the reproducibility of an electronic signature may be reduced.

The above-mentioned prior art is mainly directed to generating an encrypted electronic signature. Therefore, the prior art is limited since the integrity of a source document of an electronic document is unable to be determined. Furthermore, the prior art is silent on an electronic signature based on a biometric signal. In brief, the prior art lacks consideration on simple and efficient prevention of forgery of an electronic signature using a personal and unique biometric signal. The prior art is merely directed to performing complicated encryption on an electronic signature to prevent forgery of the electronic signature.

### SUMMARY OF THE INVENTION

The present invention is directed to generating an electronic document based on biometric signal recognition in order to secure the integrity of the electronic document.

The present invention is directed to securing the authenticity of a signer by virtue of a biometric-signal-based electronic signature in order to effectively prevent denial of signature.

Embodiments of the present invention provide methods for generating an electronic document using a biometric information recognition device, the methods including the steps of: (a) acquiring biometric information to be inserted into an electronic document or feature point information on the biometric information; (b) encoding the biometric information or the feature point information on the biometric information, a hash value for a source document of the electronic document, and acquisition time information of the biometric information or of the feature point information on the biometric information, with a biometric data standard; and (c) converting the information encoded with the biometric data standard into a mark to combine the source document of the electronic document with the mark, or combining the information encoded with the biometric data standard with a meta field of the source document of the electronic document.

In other embodiments of the present invention, methods for verifying an electronic document electronically signed based on biometric information recognition include the steps of: (a) acquiring a source document of an electronic document combined with a mark obtained by encoding biometric information electronically signed in the source document of the electronic document or feature point information obtained from the biometric information, a hash value for the source document of the electronic document, and acquisition time information of the biometric information electronically signed in the source document of the electronic document or the feature point information on the biometric information, with a biometric data standard; (b) converting the mark combined with the source document of the electronic document to acquire the information encoded with the biometric data standard; (c) decoding the information encoded with the biometric data standard to extract the biometric information or the feature point information on the biometric information, the hash value for the source document of the electronic document, and the acquisition time information of the biometric information electronically signed in the source document of the electronic document or the feature point information on the biometric information; and (d) comparing the hash value extracted from the information encoded with the biometric data standard with a hash value directly obtained from the source document of the electronic document, and comparing the biometric information or the feature point information on the biometric information extracted from the information encoded with the biometric information with biometric information input from a user argued as a signer of an electronic signature of the source document of the electronic document or feature point information obtained from the biometric information input from the user.

In still other embodiments of the present invention, methods for verifying an electronic document electronically signed based on biometric information recognition include the steps of: (a) acquiring a source document of an electronic document having a meta field combined with information obtained by encoding biometric information electronically signed in the source document of the electronic document or feature point information obtained from the biometric information, a hash value for the source document of the electronic document, and acquisition time information on the biometric information electronically signed in the source document of the electronic document, with a biometric data standard; (b) acquiring the information encoded with the biometric data standard from the meta field of the source document of the electronic document; (c) decoding the information encoded with the biometric data standard to extract the biometric information or the feature point information on the biometric information, the hash value for the source document of the electronic document, and the acquisition time information on the biometric information electronically signed in the source document of the electronic document; and (d) comparing the hash value extracted from the information encoded with the biometric data standard with a hash value directly obtained from the source document of the electronic document, and comparing the biometric information or the feature point information on the biometric information extracted from the information encoded with the biometric information with biometric information input from a user argued as a signer of an electronic signature of the source document of the electronic document or feature point information obtained from the biometric information input from the user.

In still other embodiments of the present invention, methods for generating an electronic document using a biometric information recognition device include the steps of: (a) acquiring biometric information to be inserted into an electronic document; (b) inserting a hash value for a source document of the electronic document and acquisition time information on the biometric information into the biometric information as a watermark; (c) converting the biometric information including the watermark into a mark; and (d) combining the source document of the electronic document with the mark.

In still other embodiments of the present invention, methods for generating an electronic document using a biometric information recognition device include the steps of: (a) acquiring biometric information to be inserted into an electronic document in the form of a first image; (b) extracting feature point information from the biometric information with the first image form; (c) converting the extracted feature point information into the form of a second image; (d) inserting a hash value for a source document of the electronic document and acquisition time information on the biometric information into the second image as a watermark; and (e) converting the second image including the watermark into a mark to combine the source document of the electronic document with the mark, or combining the second image including the watermark with a meta field of the source document of the electronic document.

In still embodiments of the present invention, methods for generating an electronic document using a biometric information recognition device include the steps of: (a) acquiring biometric information to be inserted into an electronic document; (b) inserting a hash value for a source document of the electronic document and acquisition time information on the biometric information into the biometric information as a watermark; and (c) combining the biometric information including the watermark with a meta field of the source document of the electronic document.

In still other embodiments of the present invention, methods for verifying an electronic document electronically signed based on biometric information recognition include the steps of: (a) acquiring a source document of an electronic document with which a hash value for the source document of the electronic document and acquisition time information on biometric information electronically signed in the source document of the electronic document are combined in the form of a mark; (b) converting the mark combined with the source document of the electronic document to acquire biometric information including a watermark; (c) extracting the hash value for the source document of the electronic document and the acquisition time information on the biometric information electronically signed in the source document of the electronic document from the biometric information including the watermark through a watermark module; and (d) comparing the hash value extracted through the watermark module with a hash value directly obtained from the source document of the electronic document, and comparing the biometric information obtained through the watermark module with biometric information input from a user argued as a signer of an electronic signature of the source document of the electronic document.

In still other embodiments of the present invention, methods for verifying an electronic document electronically signed based on biometric information recognition include the steps of: (a) acquiring a source document of an electronic document combined with a mark with a second image form into which acquisition time information on biometric information with a first image form electronically signed and a hash value for the source document of the electronic document are inserted as a watermark; (b) converting the mark combined with the source document of the electronic document to acquire biometric information with the second image form; (c) extracting the hash value for the source document of the electronic document and the acquisition time information on the biometric information with the first image form electronically signed in the source document of the electronic document from the biometric information with the second image form including the watermark through a watermark module; and (d) comparing the hash value extracted through the watermark module with a hash value directly obtained from the source document of the electronic document, and comparing the biometric information with the first image form obtained through the watermark module with biometric information input from a user argued as a signer of an electronic signature of the source document of the electronic document.

In still other embodiments of the present invention, methods for verifying an electronic document electronically signed based on biometric information recognition include the steps of: (a) acquiring a source document of an electronic document having a meta field combined with biometric information into which a hash value for the source document of the electronic document and acquisition time information on the biometric information electronically signed in the source document of the electronic document are inserted as a watermark; (b) acquiring the biometric information including the watermark from the meta field of the source document of the electronic document; (c) extracting the hash value for the source document of the electronic document and the acquisition time information on the biometric information electronically signed in the source document of the electronic document from the biometric information including the watermark through a watermark module; and (d) comparing the hash value extracted through the watermark module with a hash value directly obtained from the source document of the electronic document, and comparing the biometric information obtained through the watermark module with biometric information input from a user argued as a signer of an electronic signature of the source document of the electronic document.

In still other embodiments of the present invention, biometric information recognition devices for generating an electronic document include: a biometric information acquisition unit configured to acquire biometric information to be inserted into an electronic document or feature point information on the biometric information; a biometric information processing unit configured to encode the biometric information or the feature point information on the biometric information, a hash value for a source document of the electronic document, and acquisition time information of the biometric information or of the feature point information on the biometric information, with a biometric data standard; and an electronic signature combining unit configured to combine, if the information encoded with the biometric data standard is converted into a mark, the source document of the electronic document with the mark, or combine the information encoded with the biometric data standard with a meta field of the source document of the electronic document.

In still other embodiments of the present invention, biometric information recognition devices for generating an electronic document include: a biometric information acquisition unit configured to acquire biometric information to be inserted into an electronic document; a biometric information processing unit configured to insert a hash value for a source document of the electronic document and acquisition time information on the biometric information into the biometric information as a watermark, and convert the biometric information including the watermark into a mark; and an electronic signature combining unit configured to combine the source document of the electronic document with the mark.

In still other embodiments of the present invention, biometric information recognition devices for generating an electronic document include: a biometric information acquisition unit configured to acquire biometric information to be inserted into an electronic document in the form of a first image; a biometric information processing unit configured to extract feature point information from the biometric information with the first image form, convert the extracted feature point information into the form of a second image, and insert a hash value for a source document of the electronic document and acquisition time information on the biometric information into the second image as a watermark; and an electronic signature combining unit configured to convert the second image including the watermark into a mark to combine the source document of the electronic document with the mark, or combine the second image including the watermark with a meta field of the source document of the electronic document.

In still other embodiments of the present invention, biometric information recognition devices for generating an electronic document include: a biometric information acquisition unit configured to acquire biometric information to be inserted into an electronic document; a biometric information processing unit configured to insert a hash value for a source document of the electronic document and acquisition time information on the biometric information into the biometric information as a watermark; and an electronic signature combining unit configured to combine the biometric information including the watermark with a meta field of the source document of the electronic document.

In still other embodiments of the present invention, servers for verifying an electronic document electronically signed based on biometric information recognition include: an electronic document acquisition unit configured to acquire a source document of an electronic document combined with a mark generated by converting information obtained by encoding biometric information electronically signed in the source document of the electronic document to be verified or feature point information obtained from the biometric information, a hash value for the source document of the electronic document, and acquisition time information on the biometric information electronically signed in the source document of the electronic document, with a biometric data standard, upon receiving a request for verifying the electronic document from a terminal device; an element acquisition unit configured to convert the mark combined with the source document of the electronic document to acquire the information encoded with the biometric data standard, and decode the information encoded with the biometric data standard to extract the biometric information or the feature point information on the biometric information, the hash value for the source document of the electronic document, and the acquisition time information of the biometric information electronically signed in the source document of the electronic document; and an element comparing unit configured to compare the hash value extracted from the information encoded with the biometric data standard with a hash value directly obtained from the source document of the electronic document, and compare the biometric information or the feature point information on the biometric information extracted from the information encoded with the biometric information with biometric information input from a user argued as a signer of an electronic signature of the source document of the electronic document or feature point information obtained from the biometric information input from the user.

In still other embodiments of the present invention, servers for verifying an electronic document electronically signed based on biometric information recognition include: an electronic document acquisition unit configured to acquire a source document of an electronic document having a meta field combined with information obtained by encoding biometric information electronically signed in the source document of the electronic document to be verified or feature point information obtained from the biometric information, a hash value for the source document of the electronic document, and acquisition time information on the biometric information electronically signed in the source document of the electronic document, with a biometric data standard, upon receiving a request for verifying the electronic document from a terminal device; an element acquisition unit configured to acquire the information encoded with the biometric data standard from the meta field of the source document of the electronic document, and decode the information encoded with the biometric data standard to extract the biometric information or the feature point information on the biometric information, the hash value for the source document of the electronic document, and the acquisition time information on the biometric information electronically signed in the source document of the electronic document; and an element comparing unit configured to compare the hash value extracted from the information encoded with the biometric data standard with a hash value directly obtained from the source document of the electronic document, and compare the biometric information or the feature point information on the biometric information extracted from the information encoded with the biometric information with biometric information input from a user argued as a signer of an electronic signature of the source document of the electronic document or feature point information obtained from the biometric information input from the user.

In still other embodiments of the present invention, servers for verifying an electronic document electronically signed based on biometric information recognition include: an element acquisition unit configured to receive, from a terminal device, biometric information to be inserted into an electronic document, a hash value for a source document of the electronic document, and acquisition time information on the biometric information; a biometric information processing unit configured to insert the hash value for the source document of the electronic document and the acquisition time information on the biometric information into the biometric information as a watermark, and convert the biometric information including the watermark into a mark; and an electronic signature combining unit configured to combine the source document of the electronic document with the mark.

In still other embodiments of the present invention, servers for verifying an electronic document electronically signed based on biometric information recognition include: an element acquisition unit configured to acquire, from a terminal device, biometric information to be inserted into an electronic document in the form of a first image or in the form of feature point information extracted therefrom, and acquire a hash value for a source document of the electronic document and acquisition time information on the biometric information; a biometric information processing unit configured to convert the feature point information extracted from the biometric information with the first image form into the form of a second image, and insert the hash value for the source document of the electronic document and the acquisition time information on the biometric information into the second image as a watermark; and an electronic signature combining unit configured to convert the second image including the watermark into a mark to combine the source document of the electronic document with the mark, or combine the second image including the watermark with a meta field of the source document of the electronic document.

In still other embodiments of the present invention, servers for verifying an electronic document electronically signed based on biometric information recognition include: an element acquisition unit configured to acquire, from a terminal device, biometric information to be inserted into an electronic document, a hash value for a source document of the electronic document, and acquisition time information on the biometric information; a biometric information processing unit configured to insert the hash value for the source document of the electronic document and the acquisition time information on the biometric information into the biometric information as a watermark; and an electronic signature combining unit configured to combine the biometric information including the watermark with a meta field of the source document of the electronic document.

In still other embodiments of the present invention, servers for verifying an electronic document electronically signed based on biometric information recognition include: an electronic document acquisition unit configured to acquire a source document of an electronic document combined with a mark generated by converting biometric information into which a hash value for the source document of the electronic document to be verified and acquisition time information on the biometric information electronically signed in the source document of the electronic document are inserted as a mark, upon receiving a request for verifying the electronic document; an element acquisition unit configured to convert the mark combined with the source document of the electronic document to acquire the biometric information including the watermark, and extract the hash value for the source document of the electronic document and the acquisition time information on the biometric information electronically signed in the source document of the electronic document from the biometric information including the watermark through a watermark module; and an element comparing unit configured to compare the hash value extracted through the watermark module with a hash value directly obtained from the source document of the electronic document, and compare the biometric information obtained through the watermark module with biometric information input from a user argued as a signer of an electronic signature of the source document of the electronic document.

In still other embodiments of the present invention, servers for verifying an electronic document electronically signed based on biometric information recognition include: an electronic document acquisition unit configured to acquire a source document of an electronic document having a meta field combined with biometric information into which a hash value for the source document of the electronic document to be verified and acquisition time information on the biometric information electronically signed in the source document of the electronic document are inserted as a mark, upon receiving a request for verifying the electronic document; an element acquisition unit configured to acquire the biometric information including the watermark from the meta field of the source document of the electronic document, and extract the hash value for the source document of the electronic document and the acquisition time information on the biometric information electronically signed in the source document of the electronic document from the biometric information including the watermark through a watermark module; and an element comparing unit configured to compare the hash value extracted through the watermark module with a hash value directly obtained from the source document of the electronic document, and compare the biometric information obtained through the watermark module with biometric information input from a user argued as a signer of an electronic signature of the source document of the electronic document.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:
FIG. 1 is a schematic block diagram illustrating a configuration of an overall system for inserting a biometric-information-based electronic signature into an electronic document according to an embodiment of the present invention;
FIG. 2 is a diagram illustrating a configuration of a terminal device according to an embodiment of the present invention;
FIG. 3 is a diagram illustrating an exemplary process of generating an electronic document based on a fingerprint signature according to an embodiment of the present invention;
FIG. 4 is a schematic block diagram illustrating a configuration of an overall system for verifying an electronic document into which an electronic signature is inserted based on biometric information recognition according to an embodiment of the present invention;
FIG. 5 is a diagram illustrating a configuration of a terminal device according to an embodiment of the present invention; and
FIG. 6 is a diagram illustrating an exemplary process of verifying an electronic document according to an embodiment of the present invention.

### DETAILED DESCRIPTION OF PREFERRED EMBODIMENTS

Hereinafter, preferred embodiments of the present invention will be described in detail with reference to the accompanying drawings so that those skilled in the art easily carry out the present invention.

The term "biometric information" used herein represents identifiable unique information acquired from a human body. For example, the biometric information may include information acquired from a fingerprint, palm lines, DNA, iris, face, entire body or the like. For convenience, a fingerprint is mainly used as an example of the biometric information herein. That is, described below is focused on generation of an electronic document using information acquired from a fingerprint and verification of the electronic document.

The term "biometric data standard" used herein represents a type of protocol used for encoding or decoding acquired biometric information. The biometric data standard may include a common biometric exchange formats framework (CBEFF), but is not limited thereto and may include various later standards such as x.984 and XCBF.

The term "mark" used herein represents not only a barcode or a QR code but also various identification marks able to be visualized. Here, the term "visualization" represents that the marks can be visually identified through not only the naked eye but also a device.

### <Configuration of overall system for inserting biometric-information-recognition-based electronic signature into electronic document>

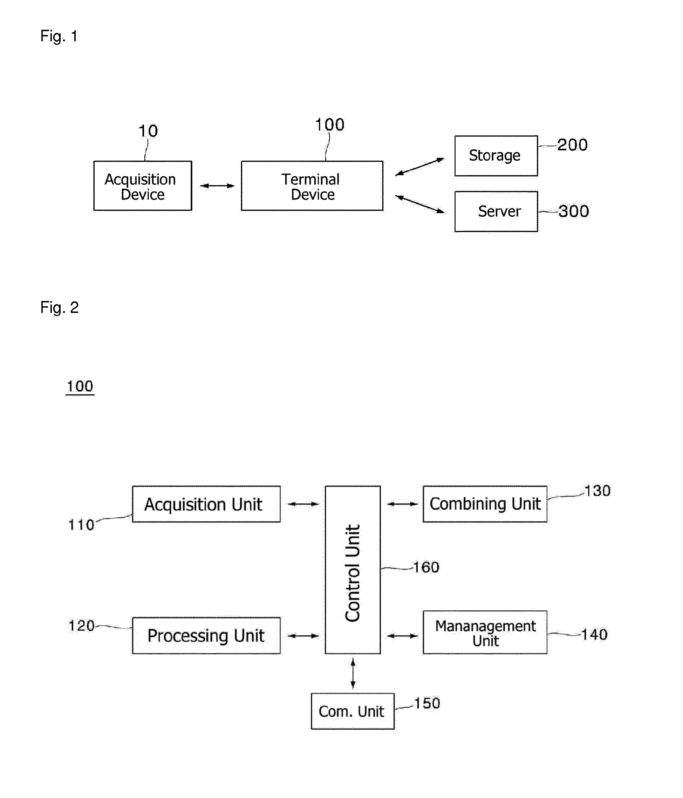

FIG. 1 is a schematic block diagram illustrating a configuration of an overall system for inserting a biometric-information-recognition-based electronic signature into an electronic document according to an embodiment of the present invention.

As illustrated in FIG. 1, the overall system according to a preferred embodiment of the present invention may include a biometric information acquisition device 10, a terminal device 100 for generating an electronic document (hereinafter, referred to as a terminal device 100), a storage unit 200, and a server 300.

The foregoing elements may communicate with each other wirelessly and/or by wire.

The terminal device 100 is a digital device for enabling a user to access and communicate with the storage unit 200 and/or the server 300 through a communication network. The terminal device 100 may include an electronic device such as a personal computer (e.g., a desktop computer, a laptop computer, or the like), a workstation, a PDA, a web pad, a smartphone, a tablet PC, or the like. Any electronic device including a memory, a microprocessor, and the like may be adopted as the terminal device 100 of the present invention.

When biometric information is acquired, the terminal device 100 may insert the biometric information as an electronic signature into a certain electronic document so as to complete the electronic document. This will be described in detail later.

The biometric information acquisition device 10 may be connected to the terminal device 100, and may collect the biometric information from the user. Here, the biometric information acquisition device 10 may not be separate from the terminal device 100, but may be built in or integrated with the terminal device 100. For example, the biometric information may be acquired using a touch screen or a camera module. In this case, the biometric acquisition device 10 may be configured with a touch screen or a camera module of the terminal device 100.

The storage unit 200 may store a completed electronic document into which an electronic signature has been inserted by the terminal device 100. In some embodiments, the storage unit 200 is positioned in an internal memory of the terminal device 100. In other embodiments, the storage unit 200 may be present outside the terminal device 100. In this case, the terminal device 100 may access data stored in the storage unit 200 through a communication network.

The server 300 may store a key and an identification number of an electronic document. The server 300 may match the stored data to a feature point of a fingerprint to identify the user and prevent the electronic signature inserted into the electronic document from being denied.

FIG. 2 is a diagram illustrating an exemplary configuration of the terminal device 100 according to an embodiment of the present invention.

As illustrated in FIG. 2, the terminal device 100 according to an embodiment of the present invention may include a biometric information acquisition unit 110, a biometric information processing unit 120, an electronic signature combining unit 130, an electronic document storage management unit 140, a communication unit 150, and a control unit 160. In a preferred embodiment of the present invention, at least a portion of the foregoing elements of the terminal device 100 may be a program module. Such a program module may be included in the terminal device 100 in the form of an operating system, application software, or other program modules. Furthermore, such a program module may be physically stored in known memory devices, for example, a remote external memory device communicable with the terminal device 100. Furthermore, such a program module may include a routine, a subroutine, a program, an object, a component, a data structure, or the like for performing specific tasks described below or processing specific types of abstract data.

The biometric information acquisition unit 110 may serve to acquire biometric information to be inserted into an electronic document or feature point information on the biometric information. Here, the biometric information acquisition unit 110 may acquire the biometric information through a biometric information collecting device connected to the terminal device 100 or a touch screen or a camera module built in the terminal device 100.

The biometric information processing unit 120 may encode biometric information or feature point information on the biometric information, a hash value for a source document of an electronic document, and acquisition time information on the biometric information (e.g., information on a time at which the biometric information is acquired) with a biometric data standard. For example, if the biometric data standard is the common biometric exchange file format (CBEFF), the information below may be inserted into the CBEFF to perform the encoding:
(1) biometric information or feature point information on the biometric information;
(2) a hash value for a source document of an electronic document; and
(3) acquisition time information on the biometric information or the feature point information thereon.

Here, (4) information on an acquisition organ of the biometric information may be further included to perform the encoding, but is not necessarily included (this condition is the same for other similar embodiments of the present disclosure unless otherwise specified).

The biometric information acquisition unit 110 may acquire encrypted information of the biometric information or encrypted information of the feature point information on the biometric information. In this case, the biometric information processing unit 120 encodes the encrypted biometric information (or the encrypted feature point information on the biometric information), the hash value for the source document of the electronic document, and the acquisition time information on the biometric information with the biometric data standard (this condition is the same for other similar embodiments of the present disclosure unless otherwise specified).

When the information encoded with the biometric data standard is converted into the form of a mark by the biometric information processing unit 120, the electronic signature combining unit 130 may combine the source document of the electronic document with the mark. In this case, the mark is combined with the source document of the electronic document so that the electronic document is completed.

In another embodiment of the present invention, the electronic signature combining unit 130 may combine the information encoded with the biometric data standard (without converting it into the form of a mark) with a meta field of the source document of the electronic document. In this case, the biometric information is non-visually combined with the source document of the electronic document, so that the electronic document is completed. Here, the meta field represents a region for recording meta data.

The completed electronic document into which the electronic signature is inserted may be transmitted by the electronic document storage management unit 140 to the storage unit 200 so as to be stored therein.

In another embodiment of the present invention, once the biometric information acquisition unit 110 acquires the biometric information to be inserted into the electronic document, the biometric information processing unit 120 may insert the hash value for the source document of the electronic document and the biometric information acquisition time information into the biometric information as a watermark, and may convert the biometric information including the watermark into a mark. Thereafter, the electronic signature combining unit 130 may combine the source document of the electronic document with the mark so as to complete the electronic document. The completed electronic document may be stored in the storage unit 200 through the electronic document storage management unit 140.

According to the above embodiment, the biometric information processing unit 120 may further perform encoding of the biometric information including the watermark with the biometric data standard. In this case, once the biometric information processing unit 120 converts the biometric information including the watermark encoded with the biometric data standard into the form of a mark, the electronic signature combining unit 130 may combine the mark with the source document of the electronic document.

Furthermore, when the biometric information processing unit 120 encodes the biometric information including the watermark with the biometric data standard, not only the biometric information including the watermark but also the signature time and the hash value for the source document of the electronic document may be additionally encoded with the biometric data standard, or the acquisition organ information on the biometric information may be additionally encoded with the biometric data standard.

The biometric information processing unit 120 may further perform an operation of compressing the biometric information including the watermark with a compressing algorithm. In this case, the biometric information processing unit 120 may convert the compressed biometric information including the watermark into a mark.

In still another embodiment of the present invention, once the biometric information acquisition unit 110 acquires the biometric information to be inserted into the electronic document in the form of a first image, the biometric information processing unit 120 may extract the feature point information from the biometric information of the first image form. Then, the biometric information processing unit 120 may convert the extracted feature point information into the form of a second image, and may insert the hash value for the source document of the electronic document and the biometric information acquisition time information into the second image obtained by converting the extracted feature point information as a watermark. Here, the biometric information processing unit 120 may acquire the biometric information in the form of the first image, but may receive the biometric information obtained by extracting a feature point from the first image. Furthermore, the biometric information processing unit 120 may receive the biometric information obtained by converting the first image from which the feature point has been extracted into the second image. Here, the electronic signature combining unit 130 may convert the second image including the watermark into a mark, and then may combine the source document of the electronic document with the mark. In still another embodiment, the second image including the watermark may be combined with the meta field of the source document of the electronic document. The electronic document completed in this manner is stored in the storage unit 200 by the electronic document storage management unit 140.

In still another embodiment of the present invention, once the biometric information acquisition unit 110 acquires the biometric information to be inserted into the electronic document, the biometric information processing unit 120 may insert the hash value for the source document of the electronic document and the biometric information acquisition time information into the biometric information as a watermark. Furthermore, the electronic signature combining unit 130 may combine the biometric information including the watermark with the meta field of the source document of the electronic document. The electronic document completed in this manner is stored in the storage unit 200 by the electronic document storage management unit 140. However, also in this case, the biometric information processing unit 120 may encode the biometric information including the watermark with the biometric data standard, so that the electronic signature combining unit 130 may combine the meta field of the source document of the electronic document with the biometric information including the watermark encoded with the biometric data standard.

The communication unit 150 enables the terminal device 100 to communicate with an external device.

The control unit 160 controls data flows of the biometric information acquisition unit 110, the biometric information processing unit 120, the electronic signature combining unit 130, the electronic document storage management unit 140, and the communication unit 150. That is, the control unit 160 controls flows of data from the outside or among elements of the terminal device 100 so that the biometric information acquisition unit 110, the biometric information processing unit 120, the electronic signature combining unit 130, the electronic document storage management unit 140, and the communication unit 150 may perform unique functions thereof.

It has been described that the steps for completing an electronic document are performed in the terminal device 100. However, several steps may be remotely performed using the server 300.

For example, an element acquisition unit (not shown) installed in the server 300 may receive, from the terminal device 100, (1) the biometric information or the feature point information on the biometric information, (2) the hash value for the source document of the electronic document, and (3) the biometric information acquisition time information, to be inserted into the electronic document. Once the element acquisition unit receives such data, a biometric information processing unit (not shown) positioned in the server 300 may encode the biometric information or the feature point information on the biometric information, the hash value for the source document of the electronic document, and the biometric information acquisition time information with the biometric data standard. Furthermore, when the information encoded with the biometric data standard is converted into a mark by the biometric information processing unit, the electronic signature combining unit (not shown) included in the server 300 may combine the source document of the electronic document with the mark so as to complete the electronic document. Without converting the information encoded with the biometric data standard into the mark, the electronic signature combining unit may combine the information encoded with the biometric data standard with the meta field of the source document of the electronic document so as to complete the electronic document. Here, once the electronic signature combining unit combines the source document of the electronic document with the mark or combines the meta field of the source document of the electronic document with the information encoded with the biometric data standard, an electronic document storage management unit (not shown) positioned in the server 300 stores the electronic document as a signed electronic document in the storage unit 200.

Another embodiment will be described. The element acquisition unit (not shown) installed in the server 300 may receive, from the terminal device 100, (1) the biometric information to be inserted into the electronic document, (2) the hash value for the source document of the electronic document, and (3) the biometric information acquisition time information. Furthermore, the biometric information processing unit positioned in the server 300 inserts the hash value for the source document of the electronic document and the biometric information acquisition time information into the biometric information as a watermark, and converts the biometric information including the watermark into a mark. Next, the electronic signature combining unit included in the server 300 may combine the source document of the electronic document with the mark.

Another embodiment will be described. The element acquisition unit (not shown) installed in the server 300 may receive, from the terminal device 100, the biometric information to be inserted into the electronic document in the form of a first image or in the form of the feature point information extracted therefrom, and may acquire the hash value for the source document of the electronic document and the biometric information acquisition time information. Then, the biometric information processing unit positioned in the server 300 converts the feature point information extracted from the biometric information of the first image form into a form of a second image. Furthermore, the biometric information processing unit may insert the hash value for the source document of the electronic document and the biometric information acquisition time information into the second image obtained by converting the feature point information extracted from the biometric information, as a watermark. Thereafter, the electronic signature combining unit of the server 300 may convert the second image including the watermark into a mark, and then may combine the source document of the electronic document with the mark so as to complete the electronic document. Alternatively, the second image including the watermark may be combined with the meta field of the source document of the electronic document so as to complete the electronic document, without converting the second image including the watermark into the mark.

For another example of a remote system, the element acquisition unit (not shown) of the server 300 may receive, from the terminal device, the biometric information to be inserted into the electronic document, the hash value for the source document of the electronic document, and the biometric information acquisition time information. Furthermore, the biometric information processing unit installed in the server 300 may insert the hash value for the source document of the electronic document and the biometric information acquisition time information into the biometric information as a watermark. Next, the electronic signature combining unit of the server 300 may combine the biometric information including the watermark with the meta field of the source document of the electronic document so as to complete the electronic document. Here, the biometric information processing unit may further perform encoding of the biometric information including the watermark with the biometric data standard. In this case, the electronic signature combining unit may combine the biometric information including the watermark encoded with the biometric data standard with the meta field of the source document of the electronic document so as to complete the electronic document.

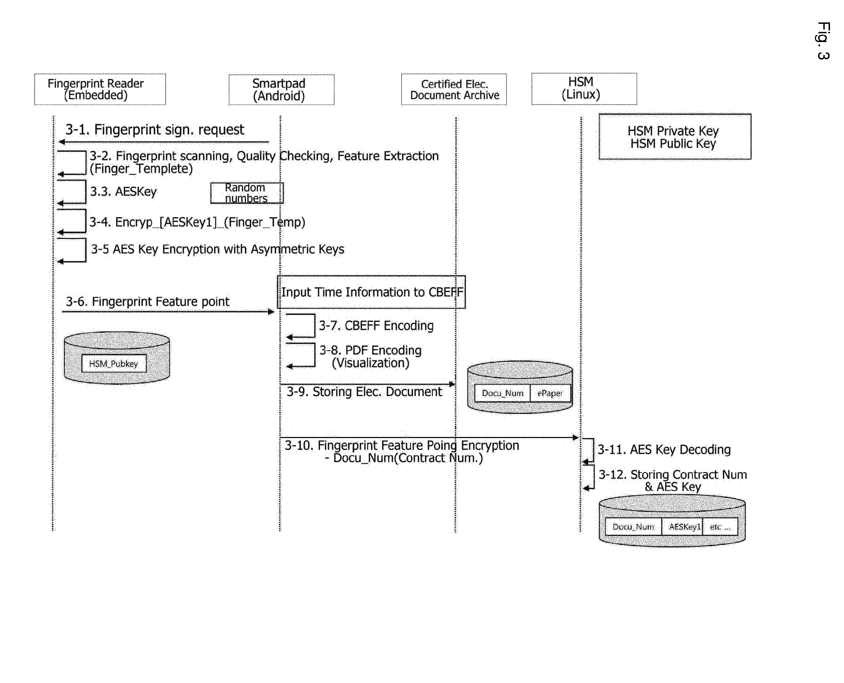

FIG. 3 is a diagram illustrating an exemplary process of generating an electronic document based on a fingerprint signature according to an embodiment of the present invention. The elements illustrated in FIG. 3, i.e., a fingerprint reader, a smartpad, a certified electronic document archive, and an HSM, exemplarily correspond to the biometric information acquisition device 10, the terminal device 100, the storage unit 200, and the server 300 of FIG. 1. It should be understood that the encrypting step or type, the decoding step or type, the encoding step or type, and the feature point extracting step described below with reference to FIG. 3 are not essential but are merely examples.

The smartpad sends a signal for requesting a fingerprint signature to the fingerprint reader (step 3-1). Then, the fingerprint reader scans a fingerprint of a user to obtain a fingerprint image with satisfactory resolution, and extracts a feature point from the fingerprint image (a so-called fingerprint template) (step 3-2). An advanced encryption standard (AES) key for encrypting the feature point of the fingerprint, i.e., the fingerprint template, is generated using random numbers (step 3-3), and the fingerprint template may be encrypted using the AES key (step 3-4). Next, the AES key itself is encrypted with asymmetric keys (step 3-5). The fingerprint reader transmits the encrypted fingerprint template and the AES key encrypted with the asymmetric keys to the smartpad (step 3-6).

The smartpad that has received the foregoing data inputs the data, the hash value extracted from the source document of the electronic document, and fingerprint signature time information acquired from Android time information into a CBEFF to perform CBEFF encoding (step 3-7). The fingerprint signature time information may be acquired from, for example, OS time information such as Android time information. Furthermore, PDF encoding for visualization may be performed to generate a mark (step 3-8). Next, the part is combined with the source document of the electronic document so as to complete the electronic document, and the electronic document is transmitted to the certified electronic document archive so as to be stored therein (step 3-9). At this time, the smartpad transmits the asymmetric-key-encrypted AES key and an identification number (e.g., a contract number) for the completed electronic document to the HSM. The HSM receives the asymmetric-key-encrypted AES key and the identification number of the completed electronic document to decode the asymmetric-key-encrypted AES key (step 3-10), and the decoded AES key and the identification number of the completed electronic document are stored (step 3-11).

### Configuration of overall system for verifying electronic document into which electronic signature is inserted based on biometric information recognition

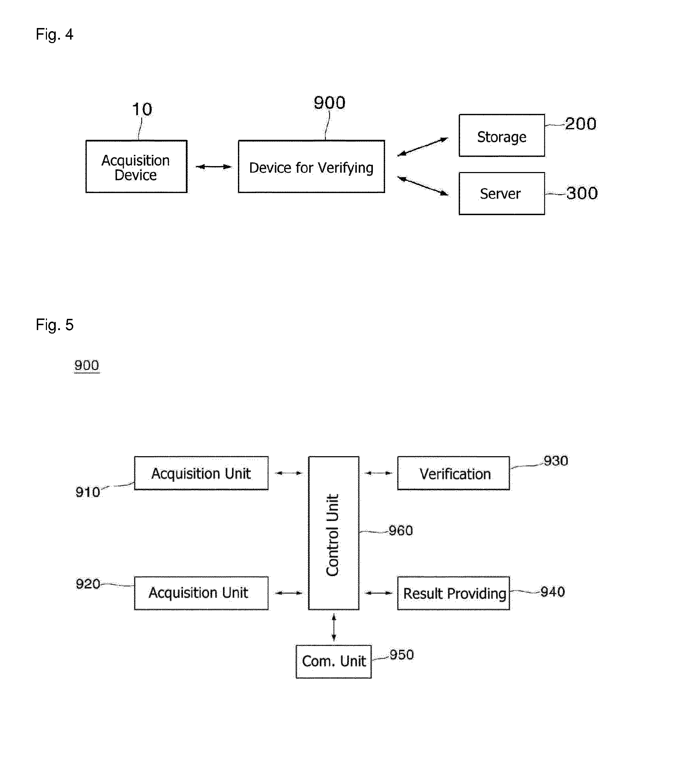

FIG. 4 is a schematic block diagram illustrating a configuration of an overall system for verifying an electronic document into which an electronic signature is inserted based on biometric information recognition according to another embodiment of the present invention.

As illustrated in FIG. 4, an electronic document verifying system according to the present embodiment may include a biometric information acquisition device 10, a terminal device 900 for verifying an electronic document (hereinafter, referred to as a terminal device 900), a storage unit 200, and a server 300. The terminal device 900 may be implemented with the same device as the terminal device 100.

The foregoing elements may communicate with each other wirelessly and/or by wire.

The terminal device 900 is a digital device for enabling a user to access and communicate with the storage unit 200 and/or the server 300 through a communication network. The terminal device 900 may include an electronic device such as a personal computer (e.g., a desktop computer, a laptop computer, or the like), a workstation, a PDA, a web pad, a smartphone, a tablet PC, or the like. Any electronic device including a memory, a microprocessor, and the like may be adopted as the terminal device 900 of the present invention.

The terminal device 900 according to the present invention verifies an electronic document into which biometric information is inserted as an electronic signature. The terminal device 900 confirms the integrity of the electronic document to be verified, and efficiently prevents denial of a person who has made an electronic signature. This will be described in more detail.

The biometric information acquisition device 10 may be connected to the terminal device 900, and may directly collect the biometric information from a user considered to have made an electronic signature. Here, the biometric information acquisition device 10 may not be separate from the terminal device 900, but may be built in or integrated with the terminal device 900. For example, the biometric information may be acquired using a touch screen or a camera module. In this case, the biometric acquisition device 10 may be configured with a touch screen or a camera module of the terminal device 900.

The storage unit 200 stores a completed electronic document into which an electronic signature is inserted. In some embodiments, the storage unit 200 is positioned in an internal memory of the terminal device 900. In other embodiments, the storage unit 200 may be present outside the terminal device 900. In this case, the terminal device 900 may access data stored in the storage unit 200 through a communication network.

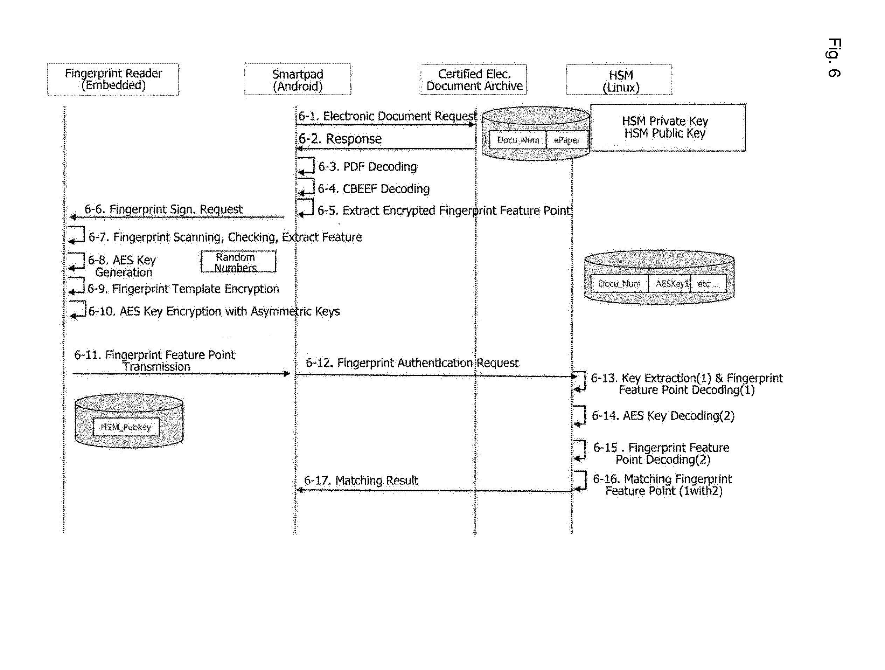

The server 300 receives and processes a request from the terminal device 900. The server 300 may compare the biometric information inserted into the electronic document as the electronic signature with the biometric information directly acquired from the biometric information acquisition device 10, and may transmit a result of the comparison to the terminal device 900. The server 300 will be described in more detail with reference to FIG. 6.

FIG. 5 is a block diagram illustrating a configuration of the terminal device 900.

As illustrated in FIG. 5, the terminal device 900 may include an electronic document acquisition unit 910, an element acquisition unit 920, a verification request unit 930, a result providing unit 940, a communication unit 950, and a control unit 960. In a preferred embodiment of the present invention, a portion of the foregoing elements of the terminal device 900 may be a program module. Such a program module may be included in the terminal device 900 in the form of an operating system, an application program module, or other program modules. Such a program module may be stored in various known memory devices. Furthermore, such a program module may be stored in a remote memory device communicable with the terminal device 900. Furthermore, such a program module may include a routine, a subroutine, a program, an object, a component, a data structure, or the like for performing specific tasks described below or processing specific types of abstract data.

The electronic document acquisition unit 910 may serve to acquire a source document of an electronic document to be verified. In detail, the electronic document acquisition unit 910 may acquire an electronic document with which a mark is combined, wherein the mark is generated by converting information obtained by encoding the plurality of pieces of information shown below with the biometric data standard:
(1) biometric information electronically signed in the source document of the electronic document or feature point information acquired from the biometric information; (2) a hash value for the source document of the electronic document; and (3) acquisition time information on the biometric information electronically signed in the source document of the electronic document (or acquisition time information on the feature point information acquired from the biometric information).

The element acquisition unit 920 converts a part of the mark combined with the source document of the acquired electronic document so as to obtain the information encoded with the biometric data standard. Furthermore, the information encoded with the biometric data standard may be decoded, so as to extract (1) the biometric information electronically signed or the feature point information on the biometric information, (2) the hash value for the source document of the electronic document, and (3) the acquisition time information on the biometric information electronically signed in the source document of the electronic document. Since such extracted data for verification is used, the integrity of the electronic document may be guaranteed, and denial of the user may be prevented.

The verification request unit 930 may request data on comparison between the hash value extracted from the information encoded with the biometric data standard and the hash value directly obtained from the source document of the electronic document. Furthermore, the verification request unit 930 may request data on comparison between the extracted biometric information or the feature point information on the biometric information and the biometric information input from a user considered to have actually electronically signed the source document of the electronic document or the feature point information obtained from the biometric information. Preferably, such a request may be sent to the server 300.

If the extracted hash value matches the hash value directly obtained from the source document of the electronic document, the result providing unit 940 provides result data for approving the integrity of the source document of the electronic document which indicates that the source document of the electronic document has not been falsified. Likewise, if the extracted biometric information or the feature point information on the biometric information matches the biometric information input from the user considered to have electronically signed the source document of the electronic document or the feature point information obtained from the biometric information, the result providing unit 940 provides result data for approving the authenticity (preventing denial of a signature) of a signer of the electronic signature of the source document of the electronic document. The information encoded with the biometric data standard may be construed as including information obtained by inserting the feature point information, the hash value for the source document of the electronic document, and the biometric information acquisition time information into the common biometric exchange file format (CBEFF) and performing encoding thereon.

The terminal device for verification according to the present invention may be variously configured or modified in various embodiments. This is because the configurations of the terminal device 900 for verification may correspond to the various configurations of the above-mentioned terminal device 100 for electronic signature.

For example, in another preferred embodiment, the electronic document acquisition unit 910 may obtain a source document of an electronic document to be verified, the meta field of the source document of the electronic document being combined with information obtained by encoding, with the biometric data standard, the biometric information electronically signed in the source document of the electronic document or the feature point information obtained from the biometric information, the hash value for the source document of the electronic document, and the acquisition time information on the biometric information electrically signed in the source document of the electronic document.

The element acquisition unit 920 may acquire the information encoded with the biometric data standard from the meta field of the source document of the electronic document, and may decode the information encoded with the biometric data standard so as to extract the biometric information or the feature point information on the biometric information, the hash value for the source document of the electronic document, and the acquisition time information on the biometric information electronically signed in the source document of the electronic document.

The verification request unit 930 requests the data on comparison between the extracted hash value and the hash value directly obtained from the source document of the electronic document. Furthermore, the verification request unit 930 may request, from the server 300, the data on comparison between the extracted biometric information or the feature point information on the biometric information and the biometric information input from the user considered to have actually electronically signed the source document of the electronic document or the feature point information obtained from the biometric information. If the extracted hash value matches the hash value directly obtained from the source document of the electronic document, the result providing unit 940 may provide the result data for approving the integrity of the source document of the electronic document which indicates that the source document of the electronic document has not been falsified. Furthermore, if the extracted biometric information or the feature point information on the biometric information matches the biometric information input from the user considered to have actually electronically signed the source document of the electronic document or the feature point information obtained from the biometric information, the result providing unit 940 may provide the result data for approving the authenticity (preventing denial of a signature) of the signer of the electronic signature of the source document of the electronic document.

Another example of the terminal device for verification will be described. The electronic document acquisition unit 910 may serve to acquire a source document of an electronic document to be verified, wherein the source document of the electronic document to be verified may be combined with a mark generated by converting the biometric information into which the hash value for the source document of the electronic document and the acquisition time information on the biometric information electronically signed in the source document of the electronic document are inserted as a watermark.

The element acquisition unit 920 may convert the mark combined with the source document of the electronic document so as to acquire the biometric information including the watermark, and may extract the hash value for the source document of the electronic document and the acquisition time information on the biometric information electronically signed in the source document of the electronic document from the biometric information including the watermark through a watermark module.

The verification request unit 930 may request the data on comparison between the extracted hash value and the hash value directly obtained from the source document of the electronic document. Furthermore, the verification request unit 930 may request, from the server 300, the data on comparison between the acquired biometric information and the biometric information input from the user considered to have actually electronically signed the source document of the electronic document.

If the hash value extracted through the watermark module matches the hash value directly obtained from the source document of the electronic document, the result providing unit 940 may provide the result data for approving the integrity of the source document of the electronic document which indicates that the source document of the electronic document has not been falsified. Furthermore, if the acquired biometric information matches the biometric information directly input from the user considered to have actually electronically signed the source document of the electronic document, the result providing unit 940 may provide the result data on the authenticity (denial prevention) of the signer of the electronic signature of the source document of the electronic document.

Alternatively, the biometric information into which the hash value for the source document of the electronic document to be verified and the acquisition time information on the biometric information electronically signed in the source document of the electronic document are inserted as a watermark may be encoded with the biometric data standard, and then the source document of the electronic document combined with a mark generated by converting the information encoded with the biometric data standard may be acquired, so that the acquired electronic document may be verified.

In this case, the element acquisition unit 920 may convert the mark part combined with the source document of the acquired electronic document so as to obtain the biometric information encoded with the biometric data standard, and then may decode the biometric information so as to restore the biometric information not encoded, thereby obtaining the biometric information including the watermark.

For another example, the electronic document acquisition unit 910 may compress the biometric information into which the hash value for the source document of the electronic document to be verified and the acquisition time information on the biometric information electronically signed in the source document of the electronic document are inserted as a watermark with a compressing algorithm, and then may acquire the source document of the electronic document combined with a mark generated by converting the compressed information. In this case, the element acquisition unit 920 may convert the mark part combined with the source document of the acquired electronic document so as to obtain the compressed biometric information, and then may restore the biometric information not compressed, thereby obtaining the biometric information including the watermark.

Another embodiment will be described. The electronic document acquisition unit 910 may extract the feature point information from the biometric information with a first image form used for an electronic signature by the user in the source document of the electronic document. In the case where the extracted feature point information is converted into the form of a second image, the electronic document acquisition unit 910 may acquire the source document of the electronic document combined with a mark with the second image form into which the acquisition time information on the biometric information with the first image form electronically signed in the source document of the electronic document and the hash value for the source document of the electronic document are inserted as a watermark.

For another example, the electronic document acquisition unit 910 may acquire the source document of the electronic document having a meta field combined with the biometric information with the second image form into which the acquisition time information on the biometric information with the first image form electronically signed in the source document of the electronic document and the hash value for the source document of the electronic document are inserted as a watermark.

The element acquisition unit 920 may acquire the biometric information with the second image form including the watermark by converting the mark part combined with the source document of the electronic document, or may acquire the biometric information with the second image form combined with the meta field of the source document of the acquired electronic document. Furthermore, the hash value for the source document of the electronic document and the acquisition time information on the biometric information with the first image form electronically signed in the source document of the electronic document may be extracted from the biometric information with the second image form including the watermark through the watermark module.

The verification request unit 930 may request the data on comparison between the extracted hash value and the hash value directly obtained from the source document of the electronic document. Furthermore, the verification request unit 930 may request, from the server 300, the data on comparison between the biometric information with the first image form acquired through the watermark module and the biometric information input from the user considered to have electronically signed the source document of the electronic document.

In another preferred embodiment of the present invention, the electronic document acquisition unit 910 may acquire the source document of the electronic document to be verified, the source document of the electronic document having a meta field combined with the biometric information into which the hash value for the source document of the electronic document and the acquisition time information on the biometric information electronically signed in the source document of the electronic document are inserted as a watermark. The element acquisition unit 920 may acquire the biometric information including the watermark from the meta field of the source document of the electronic document. Furthermore, the hash value for the source document of the electronic document and the acquisition time information on the biometric information electronically signed in the source document of the electronic document may be extracted from the biometric information including the watermark through the watermark module. In the present embodiment, the verification request unit 930 may request the data on comparison between the extracted hash value and the hash value directly obtained from the source document of the electronic document. Furthermore, the verification request unit 930 may request, from the server 300, the data on comparison between the biometric information acquired through the watermark module and the biometric information input from the user considered to have electronically signed the source document of the electronic document.

If the extracted hash value matches the hash value directly obtained from the source document of the electronic document, the result providing unit 940 may provide the result data for approving the integrity of the source document of the electronic document which indicates that the source document of the electronic document has not been falsified. Furthermore, if the biometric information acquired through the watermark module matches the biometric information directly input from the user considered to have electronically signed the source document of the electronic document, the result providing unit 940 may provide the result data for approving the authenticity of the signer of the electronic signature of the source document of the electronic document.

Furthermore, the verification subject document acquired by the electronic document acquisition unit 910 may have a meta field combined with the biometric information into which the hash value for the source document of the electronic document and the acquisition time information on the biometric information electronically signed in the source document of the electronic document are inserted as a watermark. Here, the biometric information into which the watermark is inserted may have been encoded with the biometric data standard. In this case, the element acquisition unit 920 may acquire the biometric information encoded with the biometric data standard from the meta field of the acquired electronic document, and then may decode the biometric information encoded with the biometric data standard so as to restore the biometric information not encoded, thereby obtaining the biometric information.

It has been described that the steps for verifying an electronic document electronically signed based on biometric information recognition are performed in the terminal device 900. However, several steps may be remotely performed using the server 300.

For example, upon receiving a request for verifying a specific electronic document from the terminal device 900, the electronic document acquisition unit (not shown) installed in the server 300 may acquire a source document of the electronic document combined with a mark generated by encoding, with the biometric data standard, the biometric information electronically signed in the source document of the electronic document or the feature point information obtained from the biometric information, the hash value for the source document of the electronic document, and the acquisition time information on the biometric information electronically signed in the source document of the electronic document. Here, the source document of the electronic document may be received in various manners, for example, may be received from the storage unit 200 directly or via the terminal device 900.

Thereafter, the element acquisition unit (not shown) positioned in the server 300 may convert the mark part combined with the source document of the acquired electronic document so as to obtain the information encoded with the biometric data standard. Furthermore, the element acquisition unit may decode the information encoded with the biometric data standard, so as to extract (1) the biometric information or the feature point information on the biometric information, (2) the hash value for the source document of the electronic document, and (3) the acquisition time information on the biometric information electronically signed in the source document of the electronic document.

Next, an element comparison unit (not shown) installed in the server 300 may compare the hash value extracted from the information encoded with the biometric data standard with the hash value directly obtained from the source document of the electronic document. Furthermore, the element comparison unit may compare the biometric information extracted from the information encoded with the biometric data standard or the feature point information on the biometric information with the biometric information input from the user considered to have electronically signed the source document of the electronic document or the feature point information obtained from the biometric information. If the extracted hash value matches the hash value directly obtained from the source document of the electronic document, a result providing unit (not shown) installed in the server 300 may provide, to the terminal device 900, the result data for approving the integrity of the source document of the electronic document which indicates that the source document of the electronic document has not been falsified. Furthermore, if the extracted biometric information or the feature point information on the biometric information matches the biometric information input from the user considered to have electronically signed the source document of the electronic document or the feature point information obtained from the biometric information, the result providing unit may provide, to the terminal device 900, the result data for approving the authenticity of the signer of the electronic signature of the source document of the electronic document.

Another example of electronic document verification by server will be described. The electronic document acquisition unit (not shown) installed in the server 300 may receive a request for verifying a specific electronic document from the terminal device 900. The electronic document acquisition unit may acquire a source document of the electronic document having a meta field combined with information obtained by encoding, with the biometric data standard, the biometric information electronically signed in the source document of the electronic document or the feature point information obtained from the biometric information, the hash value for the source document of the electronic document, and the acquisition time information on the biometric information electrically signed in the source document of the electronic document. Thereafter, the element acquisition unit (not shown) installed in the server 300 may acquire the information encoded with the biometric data standard from the meta field of the source document of the electronic document, and may decode the information encoded with the biometric data standard so as to extract the biometric information or the feature point information on the biometric information, the hash value for the source document of the electronic document, and the acquisition time information on the biometric information electronically signed in the source document of the electronic document. Next, the element comparison unit (not shown) installed in the server 300 may compare the extracted hash value with the hash value directly obtained from the source document of the electronic document, and may compare the extracted biometric information or the feature point information on the biometric information with the biometric information input from the user considered to have electronically signed the source document of the electronic document or the feature point information obtained from the biometric information. If the extracted hash value matches the hash value directly obtained from the source document of the electronic document, the result providing unit (not shown) installed in the server 300 may provide, to the terminal device 900, the result data for approving the integrity of the source document of the electronic document which indicates that the source document of the electronic document has not been falsified. Furthermore, if the extracted biometric information or the feature point information on the biometric information matches the biometric information input from the user considered to have electronically signed the source document of the electronic document or the feature point information obtained from the biometric information, the result providing unit may provide, to the terminal device 900, the result data for approving the authenticity of the signer of the electronic signature of the source document of the electronic document.

Another example will be described. The electronic document acquisition unit (not shown) installed in the server 300 may receive a request for verifying a specific electronic document from the terminal device 900. In the present embodiment, the verification subject electronic document acquired may be a document combined with a mark. The mark is generated by converting the biometric information into which the hash value for the source document of the electronic document and the acquisition time information on the biometric information electronically signed in the source document of the electronic document are inserted as a watermark. The element acquisition unit (not shown) installed in the server 300 converts the mark part combined with the source document of the acquired electronic document so as to obtain the biometric information including the watermark. Furthermore, the hash value for the source document of the electronic document and the acquisition time information on the biometric information electronically signed in the source document of the electronic document may be extracted from the biometric information including the watermark through the watermark module. The element comparison unit (not shown) installed in the server 300 may compare the hash value extracted through the watermark module with the hash value directly obtained from the source document of the electronic document. Furthermore, the biometric information acquired through the watermark module may be compared with the biometric information input from the user considered to have electronically signed the source document of the electronic document. If the extracted hash value matches the hash value directly obtained from the source document of the electronic document, the result providing unit (not shown) installed in the server 300 may provide, to the terminal device 900, the result data for approving the integrity of the source document of the electronic document which indicates that the source document of the electronic document has not been falsified. Furthermore, if the acquired biometric information matches the biometric information directly input from the user considered to have electronically signed the source document of the electronic document, the result providing unit may provide, to the terminal device 900, the result data for approving the authenticity of the signer of the electronic signature of the source document of the electronic document.

Furthermore, the verification subject document acquired by the electronic document acquisition unit may be an electronic document with which the biometric information into which the hash value for the source document of the electronic document and the acquisition time information on the biometric information electronically signed in the source document of the electronic document are inserted as a watermark is combined as a mark. Here, the biometric information into which the watermark is inserted may have been encoded with the biometric data standard. In this case, the element acquisition unit may acquire the biometric information encoded with the biometric data standard by converting the mark part of the acquired electronic document, and then may decode the biometric information encoded with the biometric data standard so as to restore the biometric information not encoded, thereby obtaining the biometric information including the watermark.

Another embodiment will be described. When the electronic document acquisition unit (not shown) of the server receives a request for verifying a specific electronic document from the terminal device 900, the electronic document acquisition unit may extract the feature point information from the biometric information with a first image form used for an electronic signature by the user in the source document of the electronic document, and may convert the extracted feature point information into the form of a second image.

The electronic document acquisition unit (not shown) installed in the server 300 may acquire the source document of the electronic document combined with a mark generated by converting the biometric information with the second image form into which the acquisition time information on the biometric information with the first image form electronically signed in the source document of the electronic document and the hash value for the source document of the electronic document are inserted as a watermark. Another modification may be made. That is, the feature point information may be extracted from the biometric information with the first image form used for an electronic signature by the user in the source document of the electronic document, and the extracted feature point information may be converted into the second image form. In this case, the electronic document acquisition unit (not shown) installed in the server 300 may acquire the source document of the electronic document combined with a meta field. The meta field may be combined with the biometric information with the second image form into which the acquisition time information on the biometric information with the first image form electronically signed and the hash value for the source document of the electronic document are inserted as a watermark.

The element acquisition unit (not shown) installed in the server 300 may acquire the biometric information with the second image form including the watermark by converting the mark part combined with the source document of the acquired electronic document, or may acquire the biometric information with the second image form combined with the meta field of the source document of the acquired electronic document. Furthermore, the hash value for the source document of the electronic document and the acquisition time information on the biometric information with the first image form electronically signed in the source document of the electronic document may be extracted from the biometric information with the second image form including the watermark through the watermark module. Furthermore, the element comparison unit (not shown) installed in the server 300 may compare the extracted hash value with the hash value directly obtained from the source document of the electronic document, and may compare the biometric information with the first image form with the biometric information input from the user considered to have electronically signed the source document of the electronic document.

Another embodiment for verifying an electronic document will be described. The electronic document acquisition unit (not shown) installed in the server 300 may receive a request for verifying a specific electronic document from the terminal device 900. Here, the electronic document acquired has a meta field combined with the biometric information. The biometric information into which the hash value for the source document of the electronic document and the acquisition time information on the biometric information electronically signed in the source document of the electronic document are inserted as a watermark is combined with the meta field.

The element acquisition unit installed in the server 300 may acquire the biometric information including the watermark from the meta field of the source document of the electronic document acquired. Furthermore, the element acquisition unit may extract the hash value for the source document of the electronic document and the acquisition time information on the biometric information electronically signed in the source document of the electronic document from the biometric information including the watermark through the watermark module.

The element comparison unit (not shown) included in the server 300 may compare the hash value extracted through the watermark module with the hash value directly obtained from the source document of the electronic document. Furthermore, the element comparison unit may compare the acquired biometric information with the biometric information input from the user considered to have electronically signed the source document of the electronic document. If the extracted hash value matches the hash value directly obtained from the source document of the electronic document, the result providing unit (not shown) included in the server 300 may provide, to the terminal device, the result data for approving the integrity of the source document of the electronic document which indicates that the source document of the electronic document has not been falsified. Furthermore, if the acquired biometric information matches the biometric information directly input from the user considered to have electronically signed the source document of the electronic document, the result providing unit may provide, to the terminal device, the result data for approving the authenticity of the signer of the electronic signature of the source document of the electronic document.

Furthermore, the verification subject document acquired by the electronic document acquisition unit may be an electronic document having a meta field combined with the biometric information into which the hash value for the source document of the electronic document and the acquisition time information on the biometric information electronically signed in the source document of the electronic document are inserted as a watermark. Here, the biometric information into which the watermark is inserted may have been encoded with the biometric data standard. In this case, the element acquisition unit may acquire the biometric information encoded with the biometric data standard from the meta field of the acquired electronic document, and then may decode the biometric information encoded with the biometric data standard so as to restore the biometric information not encoded, thereby obtaining the biometric information including the watermark.

FIG. 6 is a diagram illustrating an exemplary process of verifying an electronic document according to an embodiment of the present invention. The elements illustrated in FIG. 6, i.e., a fingerprint reader, a smartpad, a certified electronic document archive, and an HSM, exemplarily correspond to the biometric information acquisition device 10, the terminal device 900, the storage unit 200, and the server 300 of FIG. 4. The encrypting step or type, the decoding step or type, the encoding step or type, and the feature point extracting step described below with reference to FIG. 6 may be variously modified as described above with respect to various embodiments.

This will be described in detail with reference to FIG. 6. The smartpad may send a request for a source document of an electronic document to be verified to the certified electronic document archive (step 6-1). The certified electronic document archive that has received the request transmits an identification number of a stored electronic document and the source document of the electronic document to the smartpad (step 6-2). Once the smartpad acquires the source document of the electronic document to be verified, the smartpad may extract an encrypted fingerprint feature point from a mark combined with the electronic document (step 6-5). Before the encrypted fingerprint feature point is extracted, PDF decoding may be performed (step 6-3), and CBEFF decoding may be performed (step 6-4). As described above, in some embodiments, an unencrypted fingerprint feature point may be extracted.

Furthermore, the data extracted in step 6-5 may include a hash value for the source document of the electronic document and fingerprint acquisition time information in addition to the fingerprint feature point.

Next, the smartpad initiates a biometric information acquisition process (step 6-6). That is, a fingerprint reader is operated so as to prepare to scan a fingerprint of a user argued as a signer of an electronic signature of the source document of the electronic document. Next, the fingerprint reader may scan the fingerprint of the user, and may extract the fingerprint feature point from a scanning image with satisfactory resolution (step 6-7).

Furthermore, the fingerprint reader may generate an AES key using random numbers (step 6-8). The fingerprint feature point is encrypted using the AES key (step 6-9). Then, the fingerprint reader may encrypt the AES key with asymmetric keys (step 6-10), and may transmit the encrypted fingerprint feature point (fingerprint feature point directly scanned from the user) and the AES key encrypted with the asymmetric keys to the smartpad (step 6-11).

Next, the smartpad transmits, to the HSM, the encrypted fingerprint feature point received from the fingerprint reader and the encrypted fingerprint feature point directly extracted from the source document of the electronic document acquired from the certified electronic document archive together with the AES key encrypted with the asymmetric keys (step 6-12). The HSM decodes the fingerprint feature point extracted from the source document of the electronic document using the AES key previously stored (step 6-13). Thereafter, the HSM decodes the AES key transmitted from the fingerprint reader (step 6-14), and then decodes the fingerprint feature point transmitted from the fingerprint reader (fingerprint feature point directly scanned from the user) using the AES key (step 6-15). Furthermore, the HSM matches the fingerprint feature point extracted from the source document of the electronic document to the fingerprint feature point directly scanned from the user (step 6-16). Then, the HSM transmits data on a result of the matching to the smartpad (step 6-17).

The above-description with reference to FIG. 6 is focused on a process of identifying a user through matching between fingerprint feature points and preventing denial of a signature. However, as described above, the PDF decoding may be performed on a mark combined with the electronic document (step 6-3), and the CBEFF decoding may be performed (step 6-4), so that the hash value for the source document of the electronic document such as a fingerprint feature point may be compared with the hash value directly extracted from the electronic document to verify the integrity of the source document.

The above-mentioned embodiments according to the present invention may be implemented as program commands executable by various computer components so as to be recorded in a computer-readable recording medium. The computer-readable recording medium may include program commands, data files, and data structures, taken alone or in combination. The program commands recorded in the computer-readable recording medium may be specially designed for the present invention or may be well known and available in the technical fields of computer software. Examples of the computer-readable recording medium include hardware devices specially configured to store and perform program commands, such as hard disks, floppy disks, magnetic media such as magnetic tapes, optical media such as CD-ROMs and DVDs, magneto-optical media such as floptical disks, ROMs, RAMs, and flash memories. Examples of the program commands include not only machine language codes produced by compilers but also high-level language codes that can be executed by computers using interpreters. The above-mentioned hardware device may be configured to be operated as one or more software modules for performing operations of the present invention, and vice versa.

According to the present invention, an electronic signature is inserted based on biometric signal recognition so that an electronic document may be efficiently generated.

Furthermore, according to the present invention, the integrity of a source document of an electronic document may be effectively secured when an authenticity issue occurs with respect to the source document of the electronic document into which an electronic signature based on biometric signal recognition is inserted.

Moreover, in comparison with a conventional electronic signature that can be easily forged through image editing, not only the forgery of an electronic signature but also denial of signature may be effectively prevented.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A method for electrically signing based on biometric information recognition device, the method comprising the steps of:
(a) acquiring biometric information to be inserted into an electronic document or feature point information on the biometric information by biometric information acquisition part;
(b) encoding the biometric information or the feature point information on the biometric information, a hash value for a source document of the electronic document, and acquisition time information of the biometric information or the feature point information on the biometric information, with a biometric data standard by biometric information processing part; and
(c) completing the electronic document visualized on the electronic document changed from the state where the biometric information or the feature point information on the biometric information is obtained from integrating a source document of the electronic document with the mark using additional encoding to visualize the information encoded with the biometric data standard with the source document of the electronic document.

2. The method of claim 1, wherein the step of (b) comprises inserting the biometric information or the feature point information on the biometric information, the hash value for the source document of the electronic document, and the acquisition time information of the biometric information or the feature point information on the biometric information into a common biometric exchange file format (CBEFF) to perform encoding by the biometric information processing part.

3. The method of claim 1,
wherein the step of (a) comprises acquiring encrypted information of the biometric information or the feature point information on the biometric information,
wherein the step of (b) comprises encoding the biometric information encrypted or the feature point information on the biometric information encrypted, the hash value for the source document of the electronic document, and the acquisition time information of the biometric information or the feature point information on the biometric information by the biometric information processing part, with the biometric data standard.

4. The method of claim 1, wherein the biometric information is an electronic signature of a scanned fingerprint.

5. The method of claim 4, wherein the step (a) certify quality of the electrical signature of a scanned fingerprint and acquires a feature point information of the biometric information from the electronic signature of a scanned fingerprint only if the quality is above the preset critical value.

6. The method of claim 1, wherein the biometric information in the step (a) is obtained by biometric information collecting device connected to a terminal device, or obtained by a touch-screen or camera module of a terminal device.

7. The method of claim 1, wherein the step of (b) comprises further encoding information on an acquisition organ of the biometric information added to the feature point information on the biometric information, the hash value for the source document of the electronic document, and the acquisition time information of the biometric information or the feature point information on the biometric information by the biometric information processing part, with the biometric data standard.

8. The method of claim 1, wherein the mark of the step of (c) comprises at least one of a barcode, a QR code, or a visualized identification mark.

9. A method for verifying an electronically signed electronic document, the method comprising the steps of:
(a) acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the biometric information or the biometric information changed from the obtained status is integrated as visualized on the source document of the obtained electronic document and completed);
(b) performing decoding on the mark combined with the source document of the electronic document acquired to acquire the information encoded with the biometric data standard by element acquisition unit;
(c) performing additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the biometric information by the element acquisition unit;
(d) comparing the hash value extracted at the encoded information with the biometric data standard with a hash value directly obtained from the source document of the electronic document, and comparing the biometric information or the feature point information on the biometric information extracted at the encoded information with the biometric data standard with biometric information input from a user argued as a signer of an electronic signature of the source document of the electronic document or feature point information obtained from the biometric information input from the user by verifying request part.

10. The method of claim 9, wherein (e) providing result data for approving integrity indicating that the source document of the electronic document has not been falsified if the extracted hash value matches the hash value directly obtained from the source document of the electronic document, and providing result data for approving authenticity of the signer of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

11. The method of claim 9, wherein the information encoded with the biometric data standard is obtained by inserting the feature point information, the hash value for the source document of the electronic document, and the acquisition time information of the biometric information or the feature point information on the biometric information into a common biometric exchange file format (CBEFF) and by performing encoding thereon.

12. A method for verifying an electronically signed electronic document based on recognizing "biometric information, the method comprising the steps of:
(a) acquiring a source document of an electronic document having a meta field combined with information obtained by encoding "biometric information electronically signed in the source document of the electronic document to be verified or feature point information obtained from the "biometric information, a hash value for the source document of the electronic document, and acquisition time information of the biometric information electronically signed in the source document of the electronic document or the feature point information on the biometric information by an electronic document acquisition unit, with a biometric data standard;
(b) acquiring the information encoded with the biometric data standard from the meta field of the source document of the electronic document by an element acquisition unit;
(c) decoding the information encoded with the biometric data standard to extract the biometric information or the feature point information on the biometric information, the hash value for the source document of the electronic document, and the acquisition time information of the biometric information electronically signed in the source document of the electronic document or the feature point information on the biometric information by the element acquisition unit;
(d) comparing the hash value extracted at the encoded information with the biometric data standard with a hash value directly obtained from the source document of the electronic document, and comparing the biometric information or the feature point information on the biometric information extracted at the encoded information with the biometric data standard with biometric information input from a user argued as a signer of an electronic signature of the source document of the electronic document or feature point information obtained from the biometric information input from the user by verifying request part.

13. The method of claim 12, (e) providing result data for approving integrity indicating that the source document of the electronic document has not been falsified if the extracted hash value matches the hash value directly obtained from the source document of the electronic document by result providing part, and providing result data for preventing denial of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

14. A terminal device for electronic signature based on recognizing biometric information, the device comprising:
a biometric information acquisition unit configured to acquire biometric information to be inserted into an electronic document or feature point information on the biometric information;
a biometric information processing unit configured to encode the biometric information or the feature point information on the biometric information, a hash value for a source document of the electronic document, and acquisition time information of the biometric information or the feature point information on the biometric information, with a biometric data standard; and
an electronic signature combining unit configured to complete the electronic document visualized on the electronic document changed from the state where the biometric information or the feature point information on the biometric information is obtained from integrating a source document of the electronic document with the mark using additional encoding to visualize the information encoded with the biometric data standard with the source document of the electronic document.

15. The device of claim 14, wherein the biometric information processing unit inserts the biometric information or the feature point information on the biometric information, the hash value for the source document of the electronic document, and the acquisition time information of the biometric information or the feature point information on the biometric information into a common "biometric exchange file format (CBEFF) to perform encoding.

16. The device of claim 14, wherein the "biometric information acquisition unit acquires encrypted information of the biometric information or the feature point information on the biometric information, and encodes the biometric information encrypted or the feature point information on the "biometric information encrypted, the hash value for the source document of the electronic document, and the acquisition time information of the biometric information or the feature point information on the biometric information, with the biometric data standard.

17. The device of claim 12, wherein the "biometric information is an electronic signature of a scanned fingerprint.

18. The method of claim 14, wherein the "biometric information acquisition unit is obtained by "biometric information collecting device connected to the terminal device, or obtained by a touch-screen or camera module of the terminal device.

19. A terminal device for verifying an electronically signed electronic document, the device comprising the units of:
an electronic document acquisition unit acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the biometric information or the "biometric information changed from the obtained status is integrated as visualized on the source document of the obtained electronic document and completed);
an element acquisition unit performing decoding on the mark combined with the source document of the electronic document acquired to acquire the information encoded with the biometric data standard and additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the "biometric information;
a verifying request unit comparing the hash value extracted at the encoded information with the biometric data standard with a hash value directly obtained from the source document of the electronic document, and comparing the "biometric information or the feature point information on the biometric information extracted at the encoded information with the biometric data standard with biometric information input from a user argued as a signer of an electronic signature of the source document of the electronic document or feature point information obtained from the biometric information input from the user.

20. The device of claim 19, further comprises a providing result unit for approving integrity indicating that the source document of the electronic document has not been falsified if the extracted hash value matches the hash value directly obtained from the source document of the electronic document, and providing result data for approving authenticity of the signer of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

21. The device of claim 19, wherein the information encoded with the biometric data standard is obtained by inserting the feature point information, the hash value for the source document of the electronic document, and the acquisition time information of the biometric information or the feature point information on the biometric information into a common biometric exchange file format (CBEFF) and by performing encoding thereon.

22. A device for verifying an electronically signed electronic document based on recognizing biometric information, the method comprising the units of:
an electronic document acquisition unit acquiring a source document of an electronic document having a meta field combined with information obtained by encoding biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard;
an element acquisition unit acquiring the information encoded with the biometric data standard from the meta field of the source document of the electronic document;
an element acquisition unit decoding the information encoded with the biometric data standard to extract the biometric information or the feature point information on the biometric information, the hash value for the source document of the electronic document, and the acquisition time information of the "biometric information electronically signed in the source document of the electronic document or the feature point information on the biometric information;
a verifying request unit comparing the hash value extracted at the encoded information with the biometric data standard with a hash value directly obtained from the source document of the electronic document, and comparing the "biometric information or the feature point information on the biometric information extracted at the encoded information with the biometric data standard with "biometric information input from a user argued as a signer of an electronic signature of the source document of the electronic document or feature point information obtained from the biometric information input from the user.

23. The device of claim 22, wherein further comprises proving result unit providing result data for approving integrity indicating that the source document of the electronic document has not been falsified if the extracted hash value matches the hash value directly obtained from the source document of the electronic document, and providing result data for preventing denial of the electronic signature of the source document of the electronic document if the extracted "biometric information or the feature point information on the biometric information matches the biometric information input from the user argued as the signer of the electronic signature of the source document of the electronic document or the feature point information obtained from the biometric information input from the user.

24. A server for electrically signing based on biometric information recognition, the server comprising the units of:
a biometric information acquisition unit acquiring "biometric information to be inserted into an electronic document or feature point information on the biometric information;
a biometric information processing part encoding the biometric information or the feature point information on the biometric information, a hash value for a source document of the electronic document, and acquisition time information of the biometric information or the feature point information on the biometric information, with a "biometric data standard; and
an electronic signature combining unit completing the electronic document visualized on the electronic document changed from the state where the biometric information or the feature point information on the "biometric information is obtained from integrating a source document of the electronic document with the mark using additional encoding to visualize the information encoded with the biometric data standard with the source document of the electronic document, or completing the electronic document on the electronic document without visualizing the biometric information or the feature point information on the "biometric information through integrating meta field's of source document with encoded information with biometric data standard to complete the electronic document.

25. The server of claim 24, further comprises a storage managing unit keeping the information combined with the mark with the source document of the electronic document by electronic signature combining unit as signed electronic document.

26. A server for verifying an electronically signed electronic document, the server comprising the units of:
an electronic document acquisition unit, when verifying request for specific electronic document is received from a terminal device, acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the biometric information or the "biometric information changed from the obtained status is integrated as visualized on the source document of the obtained electronic document and completed);
an element acquisition unit performing decoding on the mark combined with the source document of the electronic document acquired to acquire the information encoded with the biometric data standard and additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the "biometric information;
an element comparing unit comparing the hash value extracted at the encoded information with the biometric data standard with a hash value directly obtained from the source document of the electronic document, and comparing the biometric information or the feature point information on the biometric information extracted at the encoded information with the biometric data standard with "biometric information input from a user argued as a signer of an electronic signature of the source document of the electronic document or feature point information obtained from the biometric information input from the user.

27. The server of claim 26, providing result data for approving integrity indicating that the source document of the electronic document has not been falsified if the extracted hash value matches the hash value directly obtained from the source document of the electronic document by result providing part, and providing result data for preventing denial of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user; and the server comprising the units of:
an electronic document acquisition unit, when verifying request for specific electronic document is received from a terminal device, acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the biometric information or the biometric information changed from the obtained status is integrated as visualized on the source document of the obtained electronic document and completed);
an element acquisition unit performing decoding on the mark combined with the source document of the electronic document acquired to acquire the information encoded with the biometric data standard and additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the "biometric information;
an element comparing unit comparing the hash value extracted at the encoded information with the biometric data standard with a hash value directly obtained from the source document of the electronic document, and comparing the biometric information or the feature point information on the biometric information extracted at the encoded information with the biometric data standard with "biometric information input from a user argued as a signer of an electronic signature of the source document of the electronic document or feature point information obtained from the biometric information input from the user.

28. A server for verifying an electronically signed electronic document, the server comprising the units of:
an electronic document acquisition unit, when verifying request for specific electronic document is received from a terminal device, acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the "biometric information or the biometric information changed from the obtained status is integrated as visualized on the source document of the obtained electronic document and completed);
an element acquisition unit acquiring the information encoded with the biometric data standard from the meta field of the source document of the electronic document;
an element acquisition unit decoding the information encoded with the biometric data standard to extract the biometric information or the feature point information on the biometric information, the hash value for the source document of the electronic document, and the acquisition time information of the "biometric information electronically signed in the source document of the electronic document or the feature point information on the biometric information;
an element comparing unit comparing the hash value extracted at the encoded information with the biometric data standard with a hash value directly obtained from the source document of the electronic document, and comparing the biometric information or the feature point information on the biometric information extracted at the encoded information with the biometric data standard with "biometric information input from a user argued as a signer of an electronic signature of the source document of the electronic document or feature point information obtained from the biometric information input from the user.

29. The server of claim 28, further comprises a providing result unit for approving integrity indicating that the source document of the electronic document has not been falsified if the extracted hash value matches the hash value directly obtained from the source document of the electronic document, and providing result data for approving authenticity of the signer of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

30. A computer-readable recording medium recording computer programs to execute the method of one of claims 1 to 13.

31. A method for electrically signing based on biometric information recognition device, the method comprising the steps of:
(a) acquiring biometric information to be inserted into an electronic document or feature point information on the biometric information by biometric information acquisition part;
(b) encoding the biometric information or the feature point information on the biometric information, a hash value for a source document of the electronic document, and acquisition time information of the biometric information or the feature point information on the biometric information, with a biometric data standard by biometric information processing part; and
(c) completing the electronic document on the electronic document without visualizing the biometric information or the feature point information on the biometric information through integrating meta field's of source document with encoded information with biometric data standard to complete the electronic document.

32. A terminal device for electronic signature based on recognizing biometric information, the device comprising:
a biometric information acquisition unit configured to acquire biometric information to be inserted into an electronic document or feature point information on the "biometric information;
a biometric information processing unit configured to encode the biometric information or the feature point information on the biometric information, a hash value for a source document of the electronic document, and acquisition time information of the biometric information or the feature point information on the biometric information, with a biometric data standard; and
an electronic signature combining unit configured to complete the electronic document on the electronic document without visualizing the biometric information or the feature point information on the biometric information through integrating meta field's of source document with encoded information with biometric data standard to complete the electronic document.

33. A server for electrically signing based on "biometric information recognition, the server comprising the units of:
a biometric information acquisition unit acquiring biometric information to be inserted into an electronic document or feature point information on the biometric information;
a biometric information processing part encoding the biometric information or the feature point information on the biometric information, a hash value for a source document of the electronic document, and acquisition time information of the biometric information or the feature point information on the biometric information, with a biometric data standard; and
an electronic signature combining unit configured to complete the electronic document on the electronic document without visualizing the biometric information or the feature point information on the biometric information through integrating meta field's of source document with encoded information with biometric data standard to complete the electronic document.

34. The server of claim 33, further comprises a storage managing unit keeping the information encoded with the biometric data standard with a meta field of the source document of the electronic document, or combined with the mark with the source document of the electronic document by electronic signature combining unit as signed electronic document.

35. A computer-readable recording medium recording computer programs to execute the method of claim 31.

## Amended claims

### Amended claims under Art. 19.1 PCT

**1.** A method for electrically signing based on biometric information recognition device, the method comprising the steps of:
(a) acquiring biometric information to be inserted into an electronic document or feature point information on the biometric information by biometric information acquisition part;
(b) encoding the biometric information or the feature point information on the biometric information, a hash value for a source document of the electronic document, and acquisition time information of the biometric information or the feature point information on the biometric information, with a biometric data standard by biometric information processing part; and
(c) completing the electronic document visualized on the electronic document changed from the state where the biometric information or the feature point information on the biometric information is obtained from integrating a source document of the electronic document with the mark using additional encoding to visualize the information encoded with the biometric data standard with the source document of the electronic document, or completing the electronic document on the electronic document without visualizing the biometric information or the feature point information on the biometric information through integrating meta field's of source document with encoded information with biometric data standard to complete the electronic document.

**2.** The method of claim 1, wherein the step of (b) comprises inserting the biometric information or the feature point information on the biometric information, the hash value for the source document of the electronic document, and the acquisition time information of the biometric information or the feature point information on the biometric information into a common biometric exchange file format (CBEFF) to perform encoding by the biometric information processing part.

**3.** The method of claim 1,
wherein the step of (a) comprises acquiring encrypted information of the biometric information or the feature point information on the biometric information,
wherein the step of (b) comprises encoding the "biometric information encrypted or the feature point information on the "biometric information encrypted, the hash value for the source document of the electronic document, and the acquisition time information of the biometric information or the feature point information on the biometric information by the biometric information processing part, with the biometric data standard.

**4.** The method of claim 1, wherein the biometric information is an electronic signature of a scanned fingerprint.

**5.** The method of claim 4, wherein the step (a) certify quality of the electrical signature of a scanned fingerprint and acquires a feature point information of the biometric information from the electronic signature of a scanned fingerprint only if the quality is above the preset critical value.

**6.** The method of claim 1, wherein the biometric information in the step (a) is obtained by biometric information collecting device connected to a terminal device, or obtained by a touch-screen or camera module of a terminal device.

**7.** The method of claim 1, wherein the step of (b) comprises further encoding information on an acquisition organ of the biometric information added to the feature point information on the biometric information, the hash value for the source document of the electronic document, and the acquisition time information of the biometric information or the feature point information on the biometric information by the biometric information processing part, with the "biometric data standard.

**8.** The method of claim 1, wherein the mark of the step of (c) comprises at least one of a barcode, a QR code, or a visualized identification mark.

**9.** A method for verifying an electronically signed electronic document, the method comprising the steps of:
(a) acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the biometric information or the "biometric information changed from the obtained status is integrated as visualized on the source document of the obtained electronic document and completed);
(b) performing decoding on the mark combined with the source document of the electronic document acquired to acquire the information encoded with the biometric data standard by element acquisition unit;
(c) performing additional decoding on the information encoded with the biometric data standard to extract the biometric information or the feature point information on the biometric information, the hash value for the source document of the electronic document, and the acquisition time information of the "biometric information electronically signed in the source document of the electronic document or the feature point information on the biometric information by the element acquisition unit;
(d) comparing the hash value extracted at the encoded information with the biometric data standard with a hash value directly obtained from the source document of the electronic document, and comparing the biometric information or the feature point information on the biometric information extracted at the encoded information with the biometric data standard with biometric information input from a user argued as a signer of an electronic signature of the source document of the electronic document or feature point information obtained from the biometric information input from the user by verifying request part.

**10.** The method of claim 9, wherein (e) providing result data for approving integrity indicating that the source document of the electronic document has not been falsified if the extracted hash value matches the hash value directly obtained from the source document of the electronic document, and providing result data for approving authenticity of the signer of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

**11.** The method of claim 9, wherein the information encoded with the biometric data standard is obtained by inserting the feature point information, the hash value for the source document of the electronic document, and the acquisition time information of the biometric information or the feature point information on the biometric information into a common biometric exchange file format (CBEFF) and by performing encoding thereon.

**12.** A method for verifying an electronically signed electronic document based on recognizing biometric information, the method comprising the steps of:
(a) acquiring a source document of an electronic document having a meta field combined with information obtained by encoding biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information by an electronic document acquisition unit, with a biometric data standard;
(b) acquiring the information encoded with the biometric data standard from the meta field of the source document of the electronic document by an element acquisition unit;
(c) decoding the information encoded with the biometric data standard to extract the biometric information or the feature point information on the biometric information, the hash value for the source document of the electronic document, and the acquisition time information of the biometric information electronically signed in the source document of the electronic document or the feature point information on the biometric information by the element acquisition unit;
(d) comparing the hash value extracted at the encoded information with the biometric data standard with a hash value directly obtained from the source document of the electronic document, and comparing the biometric information or the feature point information on the biometric information extracted at the encoded information with the biometric data standard with biometric information input from a user argued as a signer of an electronic signature of the source document of the electronic document or feature point information obtained from the "biometric information input from the user by verifying request part.

**13.** The method of claim 12, (e) providing result data for approving integrity indicating that the source document of the electronic document has not been falsified if the extracted hash value matches the hash value directly obtained from the source document of the electronic document by result providing part, and providing result data for preventing denial of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

**14.** A terminal device for electronic signature based on recognizing biometric information, the device comprising:
a biometric information acquisition unit configured to acquire biometric information to be inserted into an electronic document or feature point information on the "biometric information;
a biometric information processing unit configured to encode the biometric information or the feature point information on the biometric information, a hash value for a source document of the electronic document, and acquisition time information of the biometric information or the feature point information on the biometric information, with a biometric data standard; and
an electronic signature combining unit configured to complete the electronic document visualized on the electronic document changed from the state where the biometric information or the feature point information on the biometric information is obtained from integrating a source document of the electronic document with the mark using additional encoding to visualize the information encoded with the biometric data standard with the source document of the electronic document, or to complete the electronic document on the electronic document without visualizing the biometric information or the feature point information on the "biometric information through integrating meta field's of source document with encoded information with biometric data standard to complete the electronic document.

**15.** The device of claim 14, wherein the biometric information processing unit inserts the biometric information or the feature point information on the biometric information, the hash value for the source document of the electronic document, and the acquisition time information of the biometric information or the feature point information on the biometric information into a common "biometric exchange file format (CBEFF) to perform encoding.

**16.** The device of claim 14, wherein the biometric information acquisition unit acquires encrypted information of the biometric information or the feature point information on the biometric information, and encodes the "biometric information encrypted or the feature point information on the "biometric information encrypted, the hash value for the source document of the electronic document, and the acquisition time information of the biometric information or the feature point information on the biometric information, with the biometric data standard.

**17.** The device of claim 12, wherein the biometric information is an electronic signature of a scanned fingerprint.

**18.** The method of claim 14, wherein the biometric information acquisition unit is obtained by biometric information collecting device connected to the terminal device, or obtained by a touch-screen or camera module of the terminal device.

**19.** A terminal device for verifying an electronically signed electronic document, the device comprising the units of:
an electronic document acquisition unit acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the biometric information or the "biometric information changed from the obtained status is integrated as visualized on the source document of the obtained electronic document and completed);
an element acquisition unit performing decoding on the mark combined with the source document of the electronic document acquired to acquire the information encoded with the biometric data standard and additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the biometric information;
a verifying request unit comparing the hash value extracted at the encoded information with the biometric data standard with a hash value directly obtained from the source document of the electronic document, and comparing the "biometric information or the feature point information on the biometric information extracted at the encoded information with the biometric data standard with biometric information input from a user argued as a signer of an electronic signature of the source document of the electronic document or feature point information obtained from the biometric information input from the user.

**20.** The device of claim 19, further comprises a providing result unit for approving integrity indicating that the source document of the electronic document has not been falsified if the extracted hash value matches the hash value directly obtained from the source document of the electronic document, and providing result data for approving authenticity of the signer of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

**21.** The device of claim 19, wherein the information encoded with the biometric data standard is obtained by inserting the feature point information, the hash value for the source document of the electronic document, and the acquisition time information of the biometric information or the feature point information on the biometric information into a common biometric exchange file format (CBEFF) and by performing encoding thereon.

**22.** A device for verifying an electronically signed electronic document based on recognizing biometric information, the method comprising the units of:
an electronic document acquisition unit acquiring a source document of an electronic document having a meta field combined with information obtained by encoding biometric information electronically signed in the source document of the electronic document to be verified or feature point information obtained from the biometric information, a hash value for the source document of the electronic document, and acquisition time information of the biometric information electronically signed in the source document of the electronic document or the feature point information on the biometric information, with a biometric data standard;
an element acquisition unit acquiring the information encoded with the biometric data standard from the meta field of the source document of the electronic document;
an element acquisition unit decoding the information encoded with the biometric data standard to extract the biometric information or the feature point information on the biometric information, the hash value for the source document of the electronic document, and the acquisition time information of the "biometric information electronically signed in the source document of the electronic document or the feature point information on the biometric information;
a verifying request unit comparing the hash value extracted at the encoded information with the biometric data standard with a hash value directly obtained from the source document of the electronic document, and comparing the biometric information or the feature point information on the biometric information extracted at the encoded information with the biometric data standard with "biometric information input from a user argued as a signer of an electronic signature of the source document of the electronic document or feature point information obtained from the biometric information input from the user.

**23.** The device of claim 22, wherein further comprises proving result unit providing result data for approving integrity indicating that the source document of the electronic document has not been falsified if the extracted hash value matches the hash value directly obtained from the source document of the electronic document, and providing result data for preventing denial of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

**24.** A server for electrically signing based on biometric information recognition, the server comprising the units of:
a biometric information acquisition unit acquiring biometric information to be inserted into an electronic document or feature point information on the biometric information;
a biometric information processing part encoding the biometric information or the feature point information on the biometric information, a hash value for a source document of the electronic document, and acquisition time information of the biometric information or the feature point information on the biometric information, with a biometric data standard; and
an electronic signature combining unit completing the electronic document visualized on the electronic document changed from the state where the biometric information or the feature point information on the biometric information is obtained from integrating a source document of the electronic document with the mark using additional encoding to visualize the information encoded with the biometric data standard with the source document of the electronic document, or completing the electronic document on the electronic document without visualizing the "biometric information or the feature point information on the biometric information through integrating meta field's of source document with encoded information with biometric data standard to complete the electronic document.

**25.** The server of claim 24, further comprises a storage managing unit keeping the information combined with the mark with the source document of the electronic document by electronic signature combining unit as signed electronic document.

**26.** A server for verifying an electronically signed electronic document, the server comprising the units of:
an electronic document acquisition unit, when verifying request for specific electronic document is received from a terminal device, acquiring a source document of an electronic document combined with a mark generated by performing additional encoding for visualization on information obtained by performing first encoding on biometric information electronically signed in the source document of the electronic document to be verified or feature point information obtained from the "biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the "biometric information or the "biometric information changed from the obtained status is integrated as visualized on the source document of the obtained electronic document and completed);
an element acquisition unit performing decoding on the mark combined with the source document of the electronic document acquired to acquire the information encoded with the biometric data standard and additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the "biometric information;
an element comparing unit comparing the hash value extracted at the encoded information with the biometric data standard with a hash value directly obtained from the source document of the electronic document, and comparing the biometric information or the feature point information on the "biometric information extracted at the encoded information with the biometric data standard with biometric information input from a user argued as a signer of an electronic signature of the source document of the electronic document or feature point information obtained from the biometric information input from the user.

**27.** The server of claim 26, providing result data for approving integrity indicating that the source document of the electronic document has not been falsified if the extracted hash value matches the hash value directly obtained from the source document of the electronic document by result providing part, and providing result data for preventing denial of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user; and the server comprising the units of:
an electronic document acquisition unit, when verifying request for specific electronic document is received from a terminal device, acquiring a source document of an electronic document combined with a mark generated by performing additional encoding for visualization on information obtained by performing first encoding on biometric information electronically signed in the source document of the electronic document to be verified or feature point information obtained from the biometric information, a hash value for the source document of the electronic document, and acquisition time information of the "biometric information electronically signed in the source document of the electronic document or the feature point information on the biometric information, with a biometric data standard (the source document of the obtained electronic document having the feature point information of the biometric information or the biometric information changed from the obtained status is integrated as visualized on the source document of the obtained electronic document and completed);
an element acquisition unit performing decoding on the mark combined with the source document of the electronic document acquired to acquire the information encoded with the biometric data standard and additional decoding on the information encoded with the biometric data standard to extract the biometric information or the feature point information on the biometric information, the hash value for the source document of the electronic document, and the acquisition time information of the biometric information electronically signed in the source document of the electronic document or the feature point information on the "biometric information;
an element comparing unit comparing the hash value extracted at the encoded information with the "biometric data standard with a hash value directly obtained from the source document of the electronic document, and comparing the biometric information or the feature point information on the biometric information extracted at the encoded information with the biometric data standard with "biometric information input from a user argued as a signer of an electronic signature of the source document of the electronic document or feature point information obtained from the biometric information input from the user.

**28.** A server for verifying an electronically signed electronic document, the server comprising the units of:
an electronic document acquisition unit, when verifying request for specific electronic document is received from a terminal device, acquiring a source document of an electronic document combined with a mark generated by performing additional encoding for visualization on information obtained by performing first encoding on biometric information electronically signed in the source document of the electronic document to be verified or feature point information obtained from the "biometric information, a hash value for the source document of the electronic document, and acquisition time information of the biometric information electronically signed in the source document of the electronic document or the feature point information on the biometric information, with a biometric data standard (the source document of the obtained electronic document having the feature point information of the "biometric information or the "biometric information changed from the obtained status is integrated as visualized on the source document of the obtained electronic document and completed);
an element acquisition unit acquiring the information encoded with the biometric data standard from the meta field of the source document of the electronic document;
an element acquisition unit decoding the information encoded with the biometric data standard to extract the biometric information or the feature point information on the biometric information, the hash value for the source document of the electronic document, and the acquisition time information of the "biometric information electronically signed in the source document of the electronic document or the feature point information on the biometric information;
an element comparing unit comparing the hash value extracted at the encoded information with the "biometric data standard with a hash value directly obtained from the source document of the electronic document, and comparing the biometric information or the feature point information on the biometric information extracted at the encoded information with the biometric data standard with biometric information input from a user argued as a signer of an electronic signature of the source document of the electronic document or feature point information obtained from the biometric information input from the user.

**29.** The server of claim 28, further comprises a providing result unit for approving integrity indicating that the source document of the electronic document has not been falsified if the extracted hash value matches the hash value directly obtained from the source document of the electronic document, and providing result data for approving authenticity of the signer of the electronic signature of the source document of the electronic document if the extracted biometric information or the feature point information on the biometric information matches the biometric information input from the user argued as the signer of the electronic signature of the source document of the electronic document or the feature point information obtained from the biometric information input from the user.

**30.** A computer-readable recording medium recording computer programs to execute the method of one of claims 1 to 13.
